# EUROPÄISCHE PATENTSCHRIFT

(11) **EP 0 465 711 B1**
(45) Veröffentlichungstag und Bekanntmachung des Hinweises auf die Patenterteilung: **08.06.1994**
(21) Anmeldenummer: 90113356.1
(22) Anmeldetag: 12.07.1990
(51) Int. Cl.: B01D 33/04, B01D 33/46

(54) **Verfahren und Vorrichtung zur Abtrennung eines Stoffes von einer Unterlage**
Process and device for the separation of a substance from a support
Procédé et dispositif de séparation d'une matière d'un support

(43) Veröffentlichungstag der Anmeldung: 15.01.1992
(73) Patentinhaber: Ralf F. Piepho Abwassertechnik GmbH, 30974 Wennigsen (DE)
(72) Erfinder: Piepho, Ralf F, D-3015 Wennigsen (DE)
(74) Vertreter: Minderop, Ralph H., Dr. rer. nat.

(56) Entgegenhaltungen:
- FR-A- 656 310
- US-A- 2 395 499
- US-A- 2 395 499
- US-A- 3 945 924

## Beschreibung

Die Erfindung betrifft eine Vorrichtung zur Abtrennung eines Stoffes von einer Unterlage insbesondere die Abtrennung eines breiigen, ausgefällten Stoffes von einem Filterband.

Aus der europäischen Patentschrift 0 067 959 ist eine Vorrichtung zur Aufbereitung von verbrauchten Emulsionen, Lösungen, Industrieabwässern und dergleichen beschrieben, in der die Flüssigkeit mit einem Gemisch chemischer Stoffe behandelt wird durch den z. B. eine Emulsion gebrochen und ausgepflockt wird, dabei von einem Sorptionsmittel sorbiert und auf ein Bandfilter sedimeniert wird, Der Bandfilter besteht aus einem endlosen, mitlaufenden Zellenband und einem darauf liegenden Filterband, beispielsweise aus einem Vlies.

Der Niederschlag oder das Sediment wird von einem Filterband zurückgehalten, während das Wasser hindurchfließt und sich mit einem Filtratbehälter sammelt. Das Filterband mit dem darauf liegenden Niederschlag, der eine mehr oder weniger kontinuierlich bestimmter Dicke bildet, wird mit diesem Niederschlag zusammen verworfen, d. h. das Filterband mit dem darauf befindlichen Niederschlag wird, weil es sich bei dem Niederschlag um einen umweltunfreundlichen Stoff handeln kann, auf einer Spezialdeponie deponiert.

Das, was also deponiert wird, ist ein Produkt umweltfreundlicher Art, nämlich das Filterband aus Zellulose- oder Kunststoffasern und einem umweltunfreundlichen Produkt, nämlich dem Niederschlag. Würde man den wirklich umweltunfreundlichen, also schädlichen Niederschlag getrennt auffangen und deponieren können, würde die Masse an Deponat beträchtlich verringert und damit die Kapazität der Deponie erweitert werden.

Aufgabe der vorliegenden Erfindung ist es daher, den umweltunfreundlichen Stoff von der Unterlage z. B. von dem Filterband zu trennen und Unterlage und Stoff getrennt entsprechend ihrer Umweltverträglichkeit zu deponieren.

Gelöst wird dieses Problem durch eine Stange mit einem in geringem Abstand darüber gespannten Trennmittel, zwischen denen das Filterband hindurchgeführt und gespannt gehalten wird, in dem die Spannung im Filterband durch eine unter dem Filterband und im Abstand zu dem Trennmittel rotierende Walze erzeugt ist, deren Oberfläche mit in axialer Richtung verlaufenden Erhebungen versehen ist.

Das Trennmittel zur Abtrennung des Stoffes von der Unterlage ist im einfachsten Falle ein dünner Stahldraht und sein Abstand zur Oberfläche einer oberflächlich polierten Stange beträgt etwas mehr als die Unterlage dick ist.

Wird nun die mit dem Stoff beladene Unterlage zwischen Draht und Stange hindurchgezogen, so trennt der Draht wie ein Messer den fladen- oder haufenweise auf der Unterlage liegenden Stoff von dieser ab. Er fällt in einen Aufnahmebehälter, während die von Stoff befreite, sich kontinuierlich bewegende, unter Spannung gehaltende Unterlage an einem anderen Ort aufgefangen wird.

Bezogen auf das eben genannte europäische Patent, welches zum Stand der Technik gehört, ist die Unterlage ein Filterband und der daraufliegende Stoff ein Sediment aus der Abwasserreinigung oder von einer gebrochenen Emulsion.

Es ist leicht einzusehen, daß ein derartiges Verfahren und eine derartige Vorrichtung erhebliche Mengen völlig harmloser Stoffe von jenen Stoffen trennen, die eine weitere sorgfältige Deponierung in einer speziellen Deponie erfordern.

Aus der US-A-2 395 499 ist eine Vorrichtung für einen mechanischen Filter bekannt, auf dessen Oberfläche sich ein Filterkuchen aufbaut, der am Ende des Filtervorganges durch Gegendruck abgestoßen wird und wobei die Entfernung des Filterkuchens durch zwei parallel zueinander und im Abstand zueinander verlaufende gespannte Drähte unterstützt wird, von denen der eine ein dünner Klaviersaitendraht ist und der zweite aus einem dickeren stabförmigen Material besteht. Der dünne Klaviersaitendraht befördert zusammen mit dem Gegendruck die Trennung des Kuchens von dem Filtermedium, welcher sich aber wieder etwas mit dem Filtermedium verbindet und anschließend von dem dickeren Stab angehoben wird. Ein Gespannthalten eines Filtermediums, beispielsweise eines Filterbandes, ist hier nicht erforderlich.

In der US-A-3 545 924 ist ein gespannter drahtartiger Körper vorgesehen, der rechtwinklig zum Bewegungsweg eines Filters, beispielsweise eines Trommelfilters, verläuft und in Schwingungen versetzt wird, so daß der Draht Bewegung auf den Filterkuchen zu und von diesem weg ausführt.

Auf diese Weise soll der Filterkuchen entweder von dem Filtermedium abgetrennt oder kompaktiert werden, so daß er sich als ganzes von dem Filtermedium abtrennt. Auch hier ist also eine Vorrichtung zum Spannen eines locker fallenden Filtermediums mit einem darauf haftenden Filterkuchen nicht erforderlich.

Der vorliegenden Erfindung liegt daher die Aufgabe zugrunde, ein locker fallendes Filtermedium in Form eines Bandes zu ziehen und dabei gespannt zu halten, so daß ein darauf befindlicher Filterkuchen abtrennbar ist.

Gelöst wird diese Aufgabe dadurch, daß eine unter dem Filterband rotierende Walze das Filterband zwischen einer Stange und einem Trennmittel hindurchzieht.

Die Walze weist eine Geschwindigkeit auf, die größer ist als die Vorschubgeschwindigkeit des Filterbandes, und ist auf ihrer Oberfläche mit in axialer Richtung verlaufenden Erhebungen vesehen, die die Form von Rippen, Kämmen oder Bürsten haben können.

Das Filterband enthält danach praktisch keinen schädlichen getrennt zu deponierenden Stoff mehr, weil dieser in sich eine bessere Kohäsion aufweist als zu dem stofflich unterschiedlichen Filterband, sich also leicht ablöst. Der abzutrennende Stoff kann in lockeren Haufen mehr oder weniger verteilt auf dem Filterband aufliegen. Er kann auch durch Preßwalzen vorentwässert sein, so daß er Fladen bildet, die durch den Preßvorgang noch leichter von der Unterlage abtrennbar sind.

Zum Gespannthalten des Filterbandes dient eine Walze mit sich in axialer Richtung auf der Oberfläche der Walze erstreckenden Rippen-, Kamm-, Bürsten- oder dergleichen Erhebungen, wobei die Walze schneller läuft als die Transportgeschwindigkeit der Unterlage.

Dadurch, daß diese rippen-, kamm- oder bürstenförmigen Erhebungen auf der Walze, gegen die vom Stoff befreite Oberfläche in Transportrichtung der Unterlage einwirken, wird die Unterlage laufend gespannt gehalten und zwischen der Stange und dem beispielsweise aus einem Draht bestehenden Trennmittel hindurchgezogen.

Wenngleich die Vorrichtung zur Aufbereitung von verbrauchten Emulsionen pp. beschrieben ist und dort ein wesentliches Anwendungsgebiet besitzt, so ist sie dennoch auch zur Abtrennung von Stoffen von Unterlagen geeignet, die mit der Aufbereitung von Industrieabwässern oder Emulsionen nichts zu tun haben, aber wo es wünschenswert ist, von einer sich kontinuierlich bewegenden Unterlage einen darauf befindlichen Stoff abzutrennen, beispielsweise von Förderbändern für breiige oder smektitische Stoffe.

Die Erfindung wird nun anhand einer Zeichnung, die einen Teil einer Bandfilteranlage zeigt, nämlich das Ende des Bandfilters, d. h. jenes Teils, wo sich das Filterband von einem endlosen, umlaufenden Zellenband trennt, näher ererläutert.

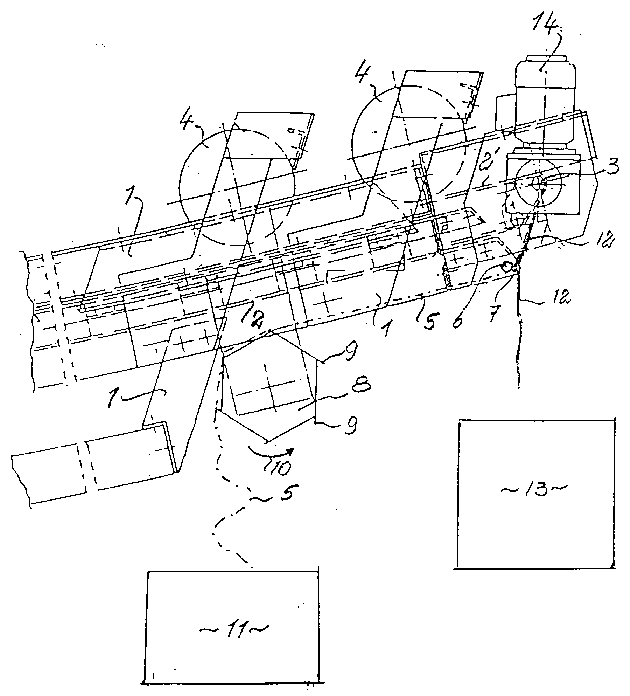

In der einzigen Figur der Zeichnung ist ein Schnitt durch einen solchen Bandfilter gezeigt.

Der in der Zeichnung dargestellte Teil eines von links nach rechts schräg nach oben führenden Auslegers einer Vorrichtung zur Aufbereitung von Abwässern besteht aus Stahlprofilen 1, die miteinander verbunden sind, und Lager- und Führungseinrichtungen für den Bandfilter tragen. Der Bandfilter besteht aus einem endlosen angetriebenen Zellenband oder Gliederband, auf welchem das Filterband aufliegt und von diesem mitgenommen wird.

Dieser Bandfilter ist durch die doppelt gestrichelte Linie 2 angedeutet, läuft in Führungen innerhalb dieses Ausvlegers, ist endlos und wird von einer zahnradartigen Walze 3, die von einem Getriebemotor 14 in wählbare Umdrehungen versetzt werden kann, angetrieben.

Auf der Oberfläche des oberen Trums 2' liegt das Filterband, welches ein dünnes, bandförmiges Vlies von bestimmter Breite ist. Oberhalb dieses Filterbandes 5 auf dem oberen Trum 2' des Zellenbandes sind Preßwalzen 4 angeordnet, die den in der Zeichnung nicht sichtbaren Niederschlag oder den nicht sichtbaren Stoff auf dem Filterband 5 verdichten und von Wasser befreien. Das Filterband trennt sich von dem Zellenband auf der Walze 3 und wird nun, wie die strichpunktierte Linie 5 zeigt, die das Filterband darstellen soll, zwischen einem fest im Gestell 1 angeordneten Stab 6 und einem als Trennmittel dienenden Draht 7 hindurchführt. Der Abstand zwischen dem Draht 7 und dem Stab 6, über dessen Oberfläche das Filterband 5 gleitet, ist nur etwas größer als das Filterband dick ist.

Das Filterband ist dann weiter über eine angetriebene Walze 8 geführt, die wie im dargestellten Ausführungsbeispiel polygonal ist und deshalb rippenartige in axialer Richtung sich über die gesamte Länge der Walze erstreckende Erhebungen 9 aufweist. Die Rotationsrichtung dieser Walze 8 erfolgt in Richtung des Pfeiles 10 mit einer Geschwindigkeit, die größer ist als die Vorschub- oder Fördergeschwindigkeit des Bandfilters und damit des Filterbandes 5. Nachdem das Filterband 5 die Walze 8 verlassen hat, fällt es in einen Aufnahmebehälter 11.

Durch die schnelle Umdrehung der Walze 8 in Richtung des Pfeiles 10 wird das Filterband 5 nach Verlassen des Gliederbandes 2 immer gestrafft gehalten und durch den Spalt zwischen Stab 6 und Trennmittel bzw. Draht 7 hindurchgezogen. Aufgrund dieser Zugbewegung wird auf der Oberfläche des Filterbandes 5 liegender Stoff, Niederschlag oder dergleichen, der mit dem Bezugszeichen 12 bezeichnet ist, von der Oberfläche des Filterbandes 5 geradezu abgeschnitten und das Filterband 5 läuft ohne den daraufliegenden Stoff 12 weiter. Der Stoff 12, Niederschlag oder dergleichen, wird in dem Behälter 13 gesammelt.

Aus der obigen Beschreibung geht klar hervor, daß hier eine Trennung zwischen dem Filterband 5 und dem darauf befindlichen Stoff, Niederschlag oder dergleichen, vorgenommen wird und daß nur der Stoff, Niederschlag oder dergleichen, der umweltunfreundlich oder umweltschädlich ist, einer besonderen Spezialdeponie zugeführt werden muß, während das Filterband 5 auf einer ganz normalen, beispielsweise Hausmülldeponie, entsorgt werden kann.

## Patentansprüche

1. Vorrichtung zur Abtrennung eines Stoffes von einem Filterband vermittels einem Stab (6) mit einem im geringen Abstand darüber gespannten Trennmittel (7), zwischen denen das Filterband (5) hindurchgezogen und gespannt gehalten wird, in dem die Spannung im Filterband (5) durch eine unter dem Filterband und im Abstand zu dem Trennmittel (7) in Transportrichtung des Filterbandes rotierende Walze (8) erzeugt ist, die eine Geschwindigkeit aufweist, die größer ist als die Vorschubgeschwindigkeit des Filterbandes, und deren Oberfläche mit in axialer Richtung verlaufenden Erhebungen (9) versehen ist.

2. Vorrichtung nach Anspruch 1, **dadurch gekennzeichnet,** daß die Erhebungen (9) Rippen, Kämme oder Bürsten sind.

3. Vorrichtung nach Anspruch 1, **dadurch gekennzeichnet,** daß das Trennmittel (7) ein dünner Stahldraht oder ein Stahlband ist.

## Claims

1. Device for separating a substance from a filter band by means of a bar (6), of a tensioned separating means (7) at a short distance above the bar, between which the filter band (5) is pulled and tensioned, in that the tension in the filter band (5) is produced by a roll (8), revolving in the conveying direction of the filter band beneath the filter band and at a distance from the separating means (7), which roll has a speed that is greater than the feed speed of the filter band, and the surface of which is provided with projections (9) extending in the axial direction.

2. Device according to Claim 1, characterized in that the projections (9) are ribs, combs or brushes.

3. Device according to Claim 1, characterized in that the separating means (7) is a thin steel wire or a steel band.

## Revendications

1. Dispositif de séparation d'une matière d'une bande filtrante au moyen d'une barre (6) et d'un organe de séparation (7) tendu à faible distance d'écartement au dessus de la barre, entre lesquels la bande filtrante (5) est tirée et maintenue tendue, la tension dans la bande filtrante (5) étant produite par un rouleau (8) tournant en dessous de la bande filtrante à distance de l'organe de séparation (7), dans le sens du transport de la bande filtrante, rouleau (8) qui présente une vitesse supérieure à la vitesse d'avancement de la bande filtrante et dont la surface est munie de proéminences (9) qui suivent son sens axial.

2. Dispositif selon la revendication 1, caractérisé en ce que les proéminences sont des côtes, des dents de peigne ou des éléments en brosse.

3. Dispositif suivant la revendication 1 caractérisé en ce que l'organe de séparation (7) est un mince fil d'acier ou une bande d'acier.
